# EUROPEAN PATENT SPECIFICATION

(11) **EP 4 148 842 B1**
(45) Date of publication and mention of the grant of the patent: **29.01.2025**
(21) Application number: 22180056.8
(22) Date of filing: 21.06.2022
(51) Int. Cl.: H01M 8/1004, H01M 4/90, H01M 4/92, H01M 4/86, H01M 4/88, H01M 8/10

(54) **MEMBRANE ELECTRODE ASSEMBLY, POLYMER ELECTROLYTE FUEL CELL, METHOD OF PRODUCING CATALYST INK, AND METHOD OF PRODUCING MEMBRANE ELECTRODE ASSEMBLY**
MEMBRAN-ELEKTRODEN-EINHEIT, POLYMERELEKTROLYT-BRENNSTOFFZELLE, VERFAHREN ZUR HERSTELLUNG EINER KATALYSATORTINTE UND VERFAHREN ZUR HERSTELLUNG EINER MEMBRAN-ELEKTRODENANORDNUNG
ASSEMBLAGE MEMBRANE-ÉLECTRODES ET PILE À COMBUSTIBLE À ÉLECTROLYTE POLYMÈRE, PROCÉDÉ DE PRODUCTION D'UNE ENCRE DE CATALYSEUR, ET PROCÉDÉ DE PRODUCTION D'UN ASSEMBLAGE MEMBRANE-ÉLECTRODES

(30) Priority: 10.09.2021 JP 2021147417
(43) Date of publication of application: 15.03.2023
(73) Proprietor: SCREEN Holdings Co., Ltd., Kyoto-shi, Kyoto 602-8585 (JP)
(72) Inventor: TAKAGI, Yoshinori, Kyoto-shi, 602-8585 (JP)
(74) Representative: Goddar, Heinz J.

(56) References cited:
- EP-A1- 2 750 226
- JP-A- 2009 218 006
- US-A1- 2005 214 631
- US-A1- 2018 261 866
- MAR M ET AL: "High energy primary lithium battery using oxidized sub-fluorinated graphite fluorides", JOURNAL OF FLUORINE CHEMISTRY, ELSEVIER, NL, vol. 227, 8 September 2019 (2019-09-08), XP085882933, ISSN: 0022-1139, [retrieved on 20190908], DOI: 10.1016/J.JFLUCHEM.2019.109369

## Description

### Technical Field

The present invention relates to a method of producing a catalyst ink to become a cathode catalyst layer of a membrane electrode assembly.

### Background Art

A fuel cell conventionally known generates electric power through an electrochemical reaction between hydrogen (H₂) in a fuel and oxygen (O₂) in the air. Several types of fuel cell are prepared in response to electrolytes to be used. One of these types is a polymer electrolyte fuel cell that uses an ion-exchange membrane (electrolyte membrane) as an electrolyte. The polymer electrolyte fuel cell is capable of operating at ordinary temperature and capable of being reduced in size and weight, so that it is used for various purposes of use such as for automobiles, portable equipment, houses, etc.

The polymer electrolyte fuel cell has a configuration with catalyst layers formed on both surfaces of an electrolyte membrane. During use of the polymer electrolyte fuel cell, hydrogen gas is supplied to an anode-side catalyst layer and oxygen gas is supplied to a cathode-side catalyst layer. This causes electrochemical reactions as follows at the anode-side catalyst layer and the cathode-side catalyst layer to generate electric power.

(anode side) H₂ → 2H⁺ + 2e⁻

(cathode side) 1/2O₂ + 2H⁺ + 2e⁻ → H₂O

The conventional polymer electrolyte fuel cell is disclosed in Patent Literature 1, for example.

### Citation List

### Patent Literature

Patent Literature 1: Japanese Patent Application Laid-Open No. 2020-077474

### Summary of Invention

### Technical Problem

As described above, in the polymer electrolyte fuel cell, water is generated in the cathode-side catalyst layer. This necessitates supply of oxygen gas and output of water to and from the cathode-side catalyst layer. In some cases, during these supply and output, poor performance of outputting water makes it difficult for oxygen gas to diffuse in the catalyst layer. This causes a problem of degradation of the voltage characteristics of the fuel cell.

In this regard, in Patent Literature 1 mentioned above, a fibrous material such as a carbon nanotube or a carbon nanofiber is provided at the cathode-side catalyst layer to improve the performance of outputting water from the catalyst layer. However, as an electrolyte membrane of the polymer electrolyte fuel cell is considerably thin, providing the fibrous material might cause damage on the electrolyte membrane. Hence, in the method of Patent Literature 1, implementing a leak test on the electrolyte membrane is considered to be required in a manufacturing step.
US 2005/214631 A1 discloses a method of producing catalyst ink to become a cathode catalyst layer of a membrane electrode assembly, comprising thoroughly mixing a graphite intercalation compound, carbon supporting Pt, solid polymer electrolyte and a solvent for dissolving the solid polymer electrolyte.
US 2018/261866 A1 discloses that a catalyst layer preferably contains a polymer electrolyte with a small EW, preferably an EW of 1000 g/mol or less, more preferably an EW of 900 g/mol or less, and particularly preferably and EW of 800 g/mol or less.
JP 2009/218 006 A discloses that the ratio ionomer/carbon (I/C) should be between 0.1/1 - 2.0/1.
EP 2 750 226 A1 discloses a first step of forming a first preparation liquid by blending a carbon particle, a catalyst particle and water, a second step of forming a second preparation liquid by adding an alcohol solution to said first preparation liquid and a solution of an ionomer.

The present invention has been made in view of the above-described circumstances, and is intended to provide a technique that achieves improvement of the performance of outputting water from a catalyst layer without use of a fibrous material such as that used in Patent Literature 1.

### Solution to Problem

A first aspect of the present invention is intended for a method of producing catalyst ink to become a cathode catalyst layer of a membrane electrode assembly, comprising: a first step of forming a first preparation liquid by blending a carbon particle, a catalyst particle, and water; a second step of forming a second preparation liquid by adding an alcohol solution to the first preparation liquid; a third step of forming a third preparation liquid by adding a water-repellent carbon particle with a fluorine group to the second preparation liquid; and a fourth step of forming a fourth preparation liquid by adding a solution of an ionomer to the third preparation liquid.

According to a second aspect of the present invention, in the method of producing the catalyst ink according to the first aspect, the ratio of the alcohol solution to the catalyst ink is equal to or greater than 15 wt%.

A third aspect of the present invention is intended for a method of producing a membrane electrode assembly comprising the step of: applying catalyst ink produced by the producing method according to the first or second aspect to one surface of an electrolyte membrane and drying the applied catalyst ink, thereby forming the cathode catalyst layer.

### Advantageous Effects of Invention

According to the first to third aspects of the present invention, the water-repellent carbon particle is added to the catalyst ink to become the cathode catalyst layer. This achieves improvement of the performance of outputting water from the cathode catalyst layer. Furthermore, the water-repellent carbon particle is added after addition of the alcohol solution. This allows the water-repellent carbon particle to disperse uniformly.

In particular, the second aspect of the present invention allows the water-repellent carbon particle to disperse more uniformly.

### Brief Description of Drawings

Fig. 1 is a schematic view of a cell of a polymer electrolyte fuel cell;
Fig. 2 is a schematic view conceptually showing the composition of a cathode catalyst layer;
Fig. 3 is a conceptual view of a water-repellent carbon particle;
Fig. 4 is a graph showing a relationship between the quantity of the water-repellent carbon particles added to the cathode catalyst layer and the voltage characteristics of the polymer electrolyte fuel cell;
Fig. 5 is a flowchart showing a procedure of producing catalyst ink;
Fig. 6 is a flowchart showing a procedure of producing a membrane electrode assembly; and
Fig. 7 shows an example of using the membrane electrode assembly in the process of hydrogenating toluene.

### Description of Preferred Embodiments

A preferred embodiment of the present invention will be described below by referring to the drawings.

### <1. Configuration of fuel cell>

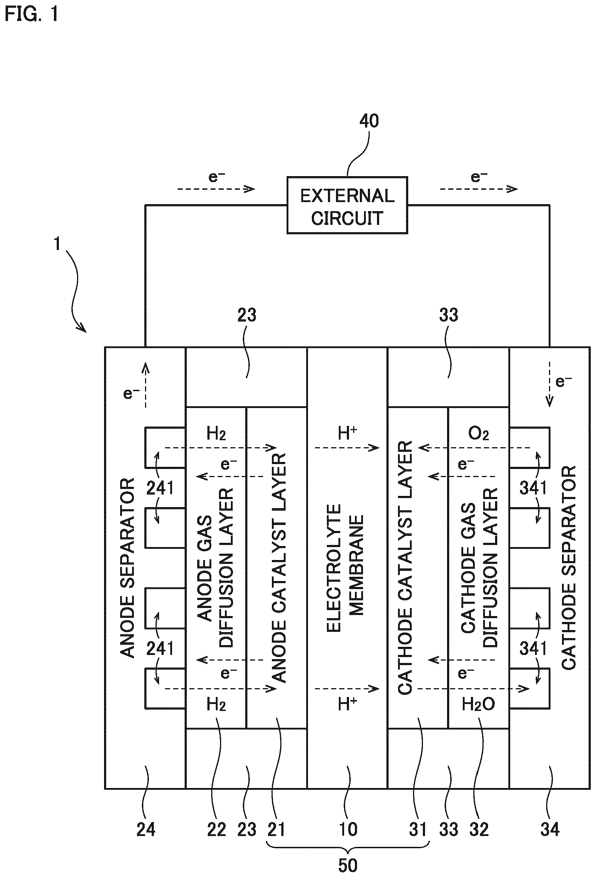

Fig. 1 is a schematic view of a cell 1 as one of cells of a polymer electrolyte fuel cell (PEFC) according to an embodiment not belonging to the present invention. The polymer electrolyte fuel cell has a configuration with a plurality of the cells 1 shown in Fig. 1 stacked in series in multiple layers. Alternatively, the polymer electrolyte fuel cell may be composed of the single cell 1.

As shown in Fig. 1, the cell 1 of the polymer electrolyte fuel cell includes an electrolyte membrane 10, an anode catalyst layer 21, an anode gas diffusion layer 22, an anode gasket 23, an anode separator 24, a cathode catalyst layer 31, a cathode gas diffusion layer 32, a cathode gasket 33, and a cathode separator 34. Of these layers of the cell 1, the electrolyte membrane 10, the anode catalyst layer 21, and the cathode catalyst layer 31 form a stack corresponding to a membrane electrode assembly (MEA) 50 according to the preferred embodiment of the present invention.

The electrolyte membrane 10 is a membrane like a thin plate having ion conductivity (ion-exchange membrane). A fluorine-based or hydrocarbon-based polymer electrolyte membrane is used as the electrolyte membrane 10. More specifically, a polymer electrolyte membrane containing perfluorocarbon sulfonic acid is used as the electrolyte membrane 10, for example. The electrolyte membrane 10 has a thickness from 5 to 30 µm, for example.

The anode catalyst layer 21 is a layer functioning as an anode-side electrode (negative electrode) of the polymer electrolyte fuel cell. The anode catalyst layer 21 is formed on an anode-side surface of the electrolyte membrane 10. The anode catalyst layer 21 contains a large number of catalyst particles. The catalyst particles are particles of a platinum alloy, for example. As an example, the platinum alloy is an alloy of at least one type of metal selected from a group including ruthenium (Ru), palladium (Pd), nickel (Ni), molybdenum (Mo), iridium (Ir), and iron (Fe), and platinum (Pt). During use of the polymer electrolyte fuel cell, hydrogen gas (H₂) is supplied to the anode catalyst layer 21. Then, by the action of the catalyst particles in the anode catalyst layer 21, the hydrogen is decomposed into hydrogen ions (H⁺) and electrons (e⁻).

The anode gas diffusion layer 22 is a layer for supplying hydrogen gas uniformly to the anode catalyst layer 21 and for causing electrons generated in the anode catalyst layer 21 to flow to the anode separator 24. The anode gas diffusion layer 22 is stacked on an outer surface of the anode catalyst layer 21. The anode catalyst layer 21 is interposed between the electrolyte membrane 10 and the anode gas diffusion layer 22. The anode gas diffusion layer 22 has electrical conductivity and is made of a porous material. As an example, carbon paper is used as the anode gas diffusion layer 22.

The anode gasket 23 is a layer for preventing leakage of hydrogen gas from the anode catalyst layer 21 and from the anode gas diffusion layer 22 to their surroundings. As shown in Fig. 1, the anode gasket 23 is formed on the anode-side surface of the electrolyte membrane 10 and surrounds the anode catalyst layer 21 and the anode gas diffusion layer 22.

The anode separator 24 is a layer for supplying hydrogen gas to the anode gas diffusion layer 22 and for outputting electrons coming from the anode catalyst layer 21 through the anode gas diffusion layer 22 to an external circuit 40. The anode separator 24 is formed on an outer surface of the anode gas diffusion layer 22 and on an outer surface of the anode gasket 23. The anode catalyst layer 21, the anode gas diffusion layer 22, and the anode gasket 23 are interposed between the electrolyte membrane 10 and the anode separator 24. The anode separator 24 has electrical conductivity and is made of a material without permeability to gas. The anode separator 24 is provided with a large number of grooves 241. The hydrogen gas is supplied to the anode gas diffusion layer 22 through the grooves 241 of the anode separator 24.

The cathode catalyst layer 31 is a layer functioning as a cathode-side electrode (positive electrode) of the polymer electrolyte fuel cell. The cathode catalyst layer 31 is formed on a cathode-side surface of the electrolyte membrane 10 (a surface on the opposite side to the anode catalyst layer 21). The cathode catalyst layer 31 contains a large number of carbon particles on which catalyst particles are supported. The catalyst particles are particles of platinum, for example. Alternatively, the catalyst particles may be prepared by mixing a tiny amount of ruthenium or cobalt particles into particles of platinum. During use of the polymer electrolyte fuel cell, oxygen gas (O₂), hydrogen ions (H⁺), and electrons (e⁻) are supplied to the cathode catalyst layer 31. Then, by the action of the catalyst particles in the cathode catalyst layer 31, water (H₂O) is generated from the oxygen gas, hydrogen ions, and electrons.

The composition of the cathode catalyst layer 31 will be described later in more detail.

The cathode gas diffusion layer 32 is a layer for supplying oxygen gas uniformly to the cathode catalyst layer 31 and for causing electrons to flow from the cathode separator 34 to the cathode catalyst layer 31. The cathode gas diffusion layer 32 is stacked on an outer surface of the cathode catalyst layer 31. The cathode catalyst layer 31 is interposed between the electrolyte membrane 10 and the cathode gas diffusion layer 32. The cathode gas diffusion layer 32 has electrical conductivity and is made of a porous material. As an example, carbon paper is used as the cathode gas diffusion layer 32.

The cathode gasket 33 is a layer for preventing leakage of oxygen gas and water from the cathode catalyst layer 31 and from the cathode gas diffusion layer 32 to their surroundings. As shown in Fig. 1, the cathode gasket 33 is formed on the cathode-side surface of the electrolyte membrane 10 and surrounds the cathode catalyst layer 31 and the cathode gas diffusion layer 32.

The cathode separator 34 is a layer for supplying oxygen gas to the cathode gas diffusion layer 32 and for causing electrons supplied from the external circuit 40 to flow into the cathode gas diffusion layer 32. The cathode separator 34 is formed on an outer surface of the cathode gas diffusion layer 32 and on an outer surface of the cathode gasket 33. The cathode catalyst layer 31, the cathode gas diffusion layer 32, and the cathode gasket 33 are interposed between the electrolyte membrane 10 and the cathode separator 34. The cathode separator 34 has electrical conductivity and is made of a material without permeability to gas. The cathode separator 34 is provided with a large number of grooves 341. The oxygen gas passes through the grooves 341 of the cathode separator 34 and is then supplied to the cathode gas diffusion layer 32.

The external circuit 40 is connected between the anode separator 24 and the cathode separator 34. More specifically, the external circuit 40 has a negative terminal electrically connected to the anode separator 24. The external circuit 40 has a positive terminal electrically connected to the cathode separator 34.

During use of the polymer electrolyte fuel cell, hydrogen gas is supplied as fuel from the anode separator 24 to the anode catalyst layer 21 through the anode gas diffusion layer 22. Then, by the action of the catalyst particles in the anode catalyst layer 21, hydrogen atoms are decomposed into hydrogen ions and electrons. The hydrogen ions propagate through the electrolyte membrane 10 into the cathode catalyst layer 31. The electrons pass through the anode gas diffusion layer 22, the anode separator 24, the external circuit 40, the cathode separator 34, and the cathode gas diffusion layer 32 and then flow into the cathode catalyst layer 31. On the cathode side of the cell 1, oxygen gas is supplied from the cathode separator 34 to the cathode catalyst layer 31 through the cathode gas diffusion layer 32. Then, by the action of the catalyst particles in the cathode catalyst layer 31, water is generated from the oxygen gas, hydrogen ions, and electrons. The generated water passes through the cathode gas diffusion layer 32 and the cathode separator 34 and is then output to the outside.

### <2. Composition of cathode catalyst layer>

The composition of the above-described cathode catalyst layer 31 will be described next in more detail.

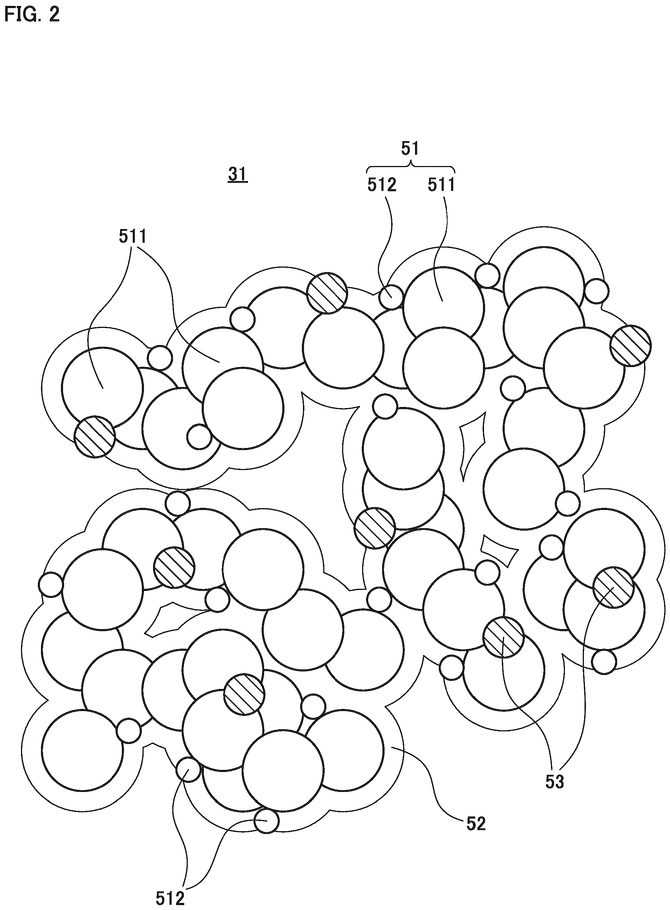

Fig. 2 is a schematic view conceptually showing the composition of the cathode catalyst layer 31. As shown in Fig. 2, the cathode catalyst layer 31 includes catalyst supporting carbon 51, an ionomer 52, and a water-repellent carbon particle 53.

The catalyst supporting carbon 51 includes a large number of carbon particles 511 and multiple catalyst particles 512 supported on the carbon particles 511. The catalyst particles 512 are particles of platinum (Pt), for example. Alternatively, the catalyst particles 512 may be prepared by mixing a tiny amount of ruthenium or cobalt particles into particles of platinum.

If the ratio of the platinum to the carbon particles 511 is too small in the catalyst supporting carbon 51, it becomes impossible to achieve sufficient catalysis. Conversely, the quantity of the carbon particles 511 is required to be increased for achieving sufficient catalysis and this unintentionally causes increase in the thickness of the cathode catalyst layer 31. On the other hand, if the ratio of the platinum to the carbon particles 511 is too large, distances between particles of the platinum are reduced. In this case, the platinum particles fuse with each other during electric power generation to cause a problem of reducing the performance of generating electric power.

Thus, the ratio of the platinum to the carbon particles 511 is desirably set to a ratio with which the thickness of the cathode catalyst layer 31 is restrained and with which the distances between the platinum particles are maintained in such a manner as to prevent fusion between the platinum particles. More specifically, the ratio (ratio by weight) of the platinum to the carbon particles 511 is desirably set equal to or greater than 38 wt% and equal to or less than 65 wt%. More desirably, the ratio (ratio by weight) of the platinum to the carbon particles 511 is set equal to or greater than 40 wt% and equal to or less than 55 wt%.

The ionomer 52 is an electrolyte polymer covering the catalyst supporting carbon 51. The ionomer 52 functions to transport hydrogen ions supplied from the electrolyte membrane 10 in the cathode catalyst layer 31. For example, nafion (perfluorocarbon sulfonic acid) is used as the ionomer 52. The ionomer 52 has a polymer chain structure with an ion-exchange group such as a sulfone group. The hydrogen ions supplied from the electrolyte membrane 10 are combined with water in the cathode catalyst layer 31 to become oxonium ions (H₃O⁺). These oxonium ions propagate through the ion-exchange group of the ionomer 52.

For favorable propagation of the oxonium ions, it is desirable to prepare a large number of ion-exchange groups in the polymer chain of the ionomer 52. More specifically, it is desirable that an EW value indicating the dry mass of the ionomer 52 per mol of ion-exchange groups (the reciprocal of the number of ion-exchange groups per unit mass of the ionomer 52) will be set equal to or less than 950. For example, the EW value is desirably set equal to or greater than 650 and equal to or less than 950.

If the ratio of the ionomer 52 to the catalyst supporting carbon 51 is too small, it becomes impossible to cover the catalyst supporting carbon 51 with the ionomer 52 sufficiently. This makes it difficult for oxonium ions to propagate through the ionomer 52 favorably. On the other hand, if the ratio of the ionomer 52 to the catalyst supporting carbon 51 is too large, voids in the cathode catalyst layer 31 are reduced. This becomes hindrance to diffusion of oxygen gas in the cathode catalyst layer 31 or to output of water generated in the cathode catalyst layer 31.

Thus, the ratio of the ionomer 52 to the catalyst supporting carbon 51 is desirably set to a ratio with which the catalyst supporting carbon 51 is covered with the ionomer 52 favorably and with which oxygen gas is caused to diffuse and water is output favorably. More specifically, the ratio (ratio by weight) of the ionomer 52 to the catalyst supporting carbon 51 is desirably set equal to or greater than 30 wt% and equal to or less than 100 wt%. More desirably, the ratio (ratio by weight) of the ionomer 52 to the catalyst supporting carbon 51 is set equal to or greater than 60 wt% and equal to or less than 100 wt%. Still more desirably, the ratio (ratio by weight) of the ionomer 52 to the catalyst supporting carbon 51 is set equal to or greater than 75 wt% and equal to or less than 85 wt%.

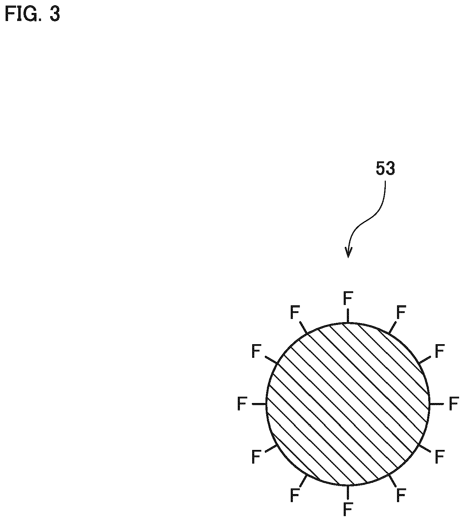

The water-repellent carbon particle 53 is an additive for improving the performance of outputting water from the cathode catalyst layer 31. Fig. 3 is a conceptual view of the water-repellent carbon particle 53. As shown in Fig. 3, the water-repellent carbon particle 53 has a surface provided with multiple fluorine groups (F) with water repellency. The water-repellent carbon particle 53 has a diameter of equal to or greater than 2 nm and equal to or less than 500 nm, for example. The water-repellent carbon particle 53 has a specific surface area of equal to or greater than 50 m²/g and equal to or less than 900 m²/g, for example.

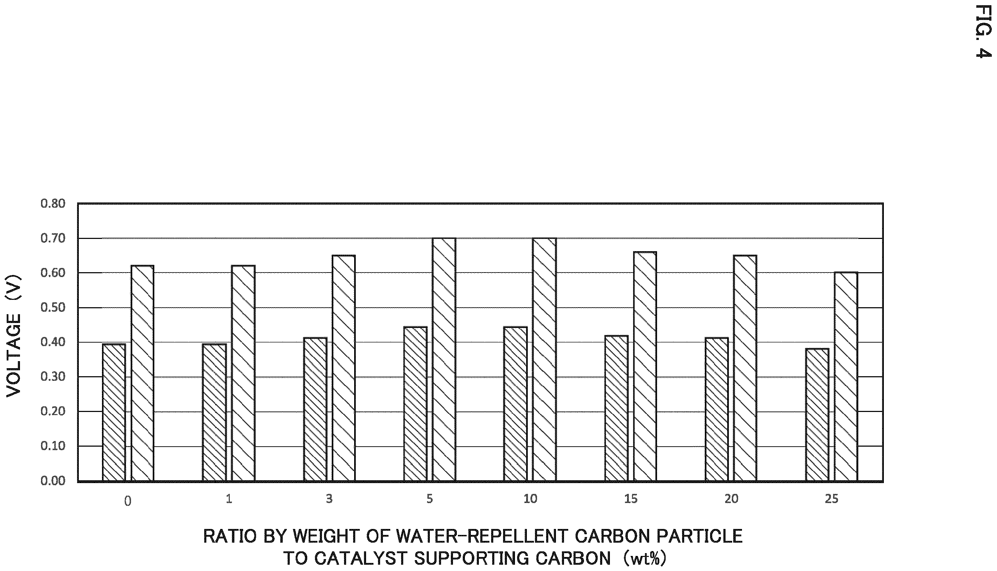

Fig. 4 is a graph showing a relationship between the quantity of the water-repellent carbon particles 53 added to the cathode catalyst layer 31 and the voltage characteristics of the polymer electrolyte fuel cell. In the graph of Fig. 4, a horizontal axis shows the ratio (ratio by weight) of the water-repellent carbon particles 53 to the catalyst supporting carbon 51. A vertical axis shows an output voltage obtained from the polymer electrolyte fuel cell. A voltage value shown in the graph of Fig. 4 is determined at a current density of 1.5 A/cm². The voltage characteristics shown in the graph of Fig. 4 are determined in two cases including one case where the relative humidity of supplied gas is 20% RH and the other case where this relative humidity is 100% RH.

Adding the water-repellent carbon particle 53 to the cathode catalyst layer 31 allows water generated in the cathode catalyst layer 31 to be output efficiently by means of the water-repelling action of the fluorine groups. Thus, voids are reserved in the cathode catalyst layer 31 to allow oxygen gas to be supplied efficiently. As a result, as shown in Fig. 4, adding the water-repellent carbon particle 53 to the cathode catalyst layer 31 achieves improvement of the voltage characteristics of the polymer electrolyte fuel cell compared to the absence of addition of the water-repellent carbon particle 53.

However, if the quantity of the added water-repellent carbon particles 53 is too large, the fluorine groups having insulating properties exert influence to increase an electrical resistance in the cathode catalyst layer 31. Hence, like in a case shown in Fig. 4 where the ratio by weight of the water-repellent carbon particles 53 to the catalyst supporting carbon 51 is 25 wt%, this conversely degrades the voltage characteristics of the polymer electrolyte fuel cell.

Thus, it is desirable that the water-repellent carbon particles 53 will be added to a quantity with which the performance of outputting water from the cathode catalyst layer 31 is improved and with which the probability of degradation of electrical conductivity in the cathode catalyst layer 31 caused by the influence of the fluorine groups is reduced. More specifically, the ratio (ratio by weight) of the water-repellent carbon particles 53 to the catalyst supporting carbon 51 is desirably set equal to or greater than 2 wt% and equal to or less than 20 wt%. More desirably, the ratio (ratio by weight) of the water-repellent carbon particles 53 to the catalyst supporting carbon 51 is set equal to or greater than 5 wt% and equal to or less than 15 wt%. For example, the ratio (ratio by weight) of the water-repellent carbon particles 53 to the catalyst supporting carbon 51 is preferably set to 10 wt%.

As described above, in the cathode catalyst layer 31, hydrogen ions are combined with water to propagate as oxonium ions. Thus, for increasing the performance of the cell, moisture of a certain degree is desirably retained uniformly in the cathode catalyst layer 31. However, too much moisture hinders diffusion of oxygen gas in the cathode catalyst layer 31. For this reason, it is desirable to optimize a moisture content to be retained in the cathode catalyst layer 31.

In this regard, reducing the above-described EW value of the ionomer 52 contributes to increasing a moisture content in the cathode catalyst layer 31. On the other hand, adding the water-repellent carbon particles 53 contributes to reducing a moisture content in the cathode catalyst layer 31. Thus, by setting the EW value of the ionomer 52 equal to or less than 950 and by adding the water-repellent carbon particles 53 as described above, it becomes possible to keep a moisture content retained in the cathode catalyst layer 31 within an appropriate range. This achieves further improvement of the voltage characteristics of the polymer electrolyte fuel cell.

### <3. Procedure of producing catalyst ink>

The cathode catalyst layer 31 is formed by applying catalyst ink in paste form on a surface of the electrolyte membrane 10. The following describes a method of producing the catalyst ink to become the cathode catalyst layer 31.

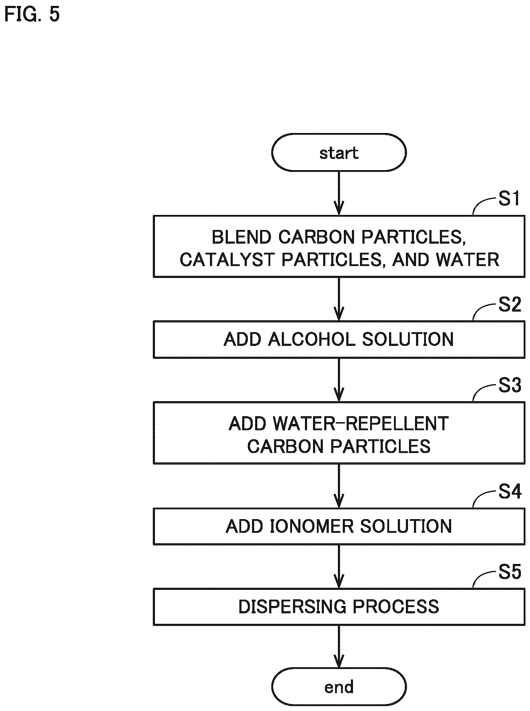

Fig. 5 is a flowchart showing a procedure of producing the catalyst ink. As shown in Fig, 5, for producing the catalyst ink, the carbon particles 511, the catalyst particles 512, and water are first blended to form a first preparation liquid (first step S1). In the first step S1, the water is added to prevent the carbon particles 511 from catching fire.

Next, an alcohol solution is added to the first preparation liquid to form a second preparation liquid (second step S2). The alcohol solution is methanol, ethanol, 1-propanol, or 2-propanol, for example.

Next, the water-repellent carbon particles 53 with fluorine groups are added to the second preparation liquid to form a third preparation liquid (third step S3). In the third step S3, the water-repellent carbon particles 53 disperse in the alcohol solution added in the second step S2. Adding the water-repellent carbon particles 53 in the above-described first step S1 makes it likely that the water-repellent carbon particles 53 will form lumps as a result of being prevented from dispersing in the first preparation liquid by the water-repelling action of the fluorine groups. By contrast, according to the present preferred embodiment, the alcohol solution having a small angle of contact (having high compatibility with the water-repellent carbon particles 53) is added in advance in the second step S2, and then the water-repellent carbon particles 53 are added in the third step S3. This allows the water-repellent carbon particles 53 to disperse uniformly in the third preparation liquid.

Next, an ionomer solution is added to the third preparation liquid to form a fourth preparation liquid (fourth step S4). The ionomer solution is a solution prepared by dissolving the ionomer 52 in water and alcohol. The ionomer solution has a high proportion of water, so that it is added after the water-repellent carbon particles 53 are added and disperse in the third step S3.

Next, dispersing process is performed further on the fourth preparation liquid (fifth step S5). In the fifth step, the fourth preparation liquid is agitated, for example. This causes the water-repellent carbon particles 53 to disperse more uniformly in the fourth preparation liquid. As a result, the catalyst ink is generated. The ratio (ratio by weight) of the alcohol solution to the catalyst ink finally generated is desirably set equal to or greater than 15 wt%. This allows the water-repellent carbon particles 53 to disperse with still higher performance in the catalyst ink.

### <4. Method of producing membrane electrode assembly>

A method of producing the membrane electrode assembly 50 using the above-described catalyst ink will be described next.

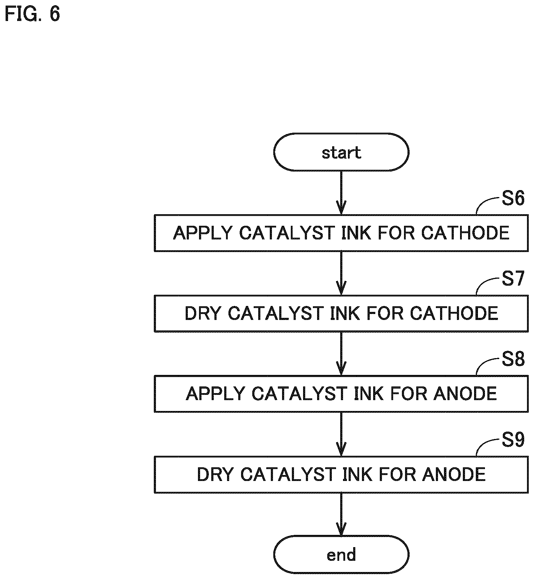

Fig. 6 is a flowchart showing a procedure of producing the membrane electrode assembly 50. As shown in Fig. 6, for producing the membrane electrode assembly 50, the catalyst ink for cathode produced by the above-described procedure is applied to one of the surfaces of the electrolyte membrane 10 (sixth step S6). Then, the applied catalyst ink is dried (seventh step S7). By doing so, the cathode catalyst layer 31 is formed on the one surface of the electrolyte membrane 10.

Furthermore, catalyst ink for anode is applied to the other surface of the electrolyte membrane 10 (eighth step S8). Then, the applied catalyst ink is dried (ninth step S9). By doing so, the anode catalyst layer 21 is formed on the other surface of the electrolyte membrane 10. As a result, the membrane electrode assembly 50 composed of the electrolyte membrane 10, the anode catalyst layer 21, and the cathode catalyst layer 31 is obtained.

Order of implementation may be reversed between formation of the cathode catalyst layer 31 including the sixth step S6 and the seventh step S7 and formation of the anode catalyst layer 21 including the eighth step S8 and the ninth step S9.

### <5. Modifications>

The preferred embodiment described above is intended for the membrane electrode assembly 50 used in the polymer electrolyte fuel cell. However, the membrane electrode assembly of the present invention may be used for purpose other than the polymer electrolyte fuel cell.

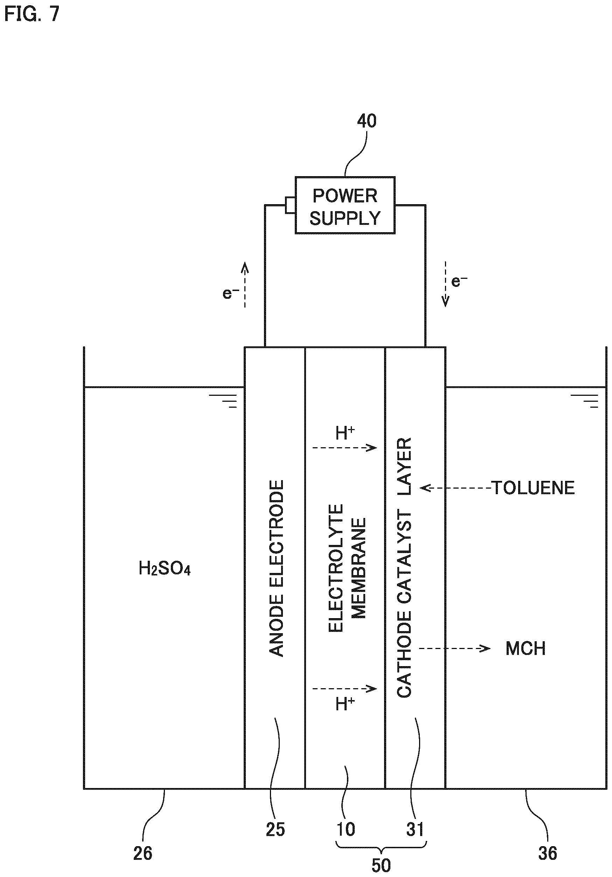

According to one exemplary technique, an organic hydride (methylcyclohexane, for example) prepared by hydrogenating an aromatic compound such as toluene is used as a carrier for transporting hydrogen. Fig. 7 shows an example of a device of generating the organic hydride according to this technique. The device of Fig. 7 uses the membrane electrode assembly 50 including the electrolyte membrane 10 and the cathode catalyst layer 31 formed on one surface of the electrolyte membrane 10. The composition of the cathode catalyst layer 31 is the same as that in the above-described case of the polymer electrolyte fuel cell.

Sulfuric acid is stored in a reservoir 26 on the anode side. Toluene is stored in a reservoir 36 on the cathode side. By applying a voltage between the cathode catalyst layer 31 and an anode electrode 25 and supplying electrons (e⁻) to the cathode catalyst layer 31, the following electroreduction reaction is caused in the cathode catalyst layer 31. By doing so, methylcyclohexane (MCH) as an organic hydride can be obtained.

C₇H₈ + 6H⁺ + 6e⁻ → C₇H₁₄

As described above, the water-repellent carbon particles 53 with fluorine groups may be added to the cathode catalyst layer 31 of the membrane electrode assembly 50 used in the process of hydrogenating toluene.

### Reference Signs List

- 1: Cell of polymer electrolyte fuel cell
- 10: Electrolyte membrane
- 21: Anode catalyst layer
- 22: Anode gas diffusion layer
- 23: Anode gasket
- 24: Anode separator
- 25: Anode electrode
- 31: Cathode catalyst layer
- 32: Cathode gas diffusion layer
- 33: Cathode gasket
- 34: Cathode separator
- 40: External circuit
- 50: Membrane electrode assembly
- 51: Catalyst supporting carbon
- 52: Ionomer
- 53: Water-repellent carbon particle
- 241: Groove of anode separator
- 341: Groove of cathode separator
- 511: Carbon particle
- 512: Catalyst particle

## Claims

1. A method of producing catalyst ink to become a cathode catalyst layer (31) of a membrane electrode assembly (50), comprising:
a first step (S1) of forming a first preparation liquid by blending a carbon particle (511), a catalyst particle (512), and water;
a second step (S2) of forming a second preparation liquid by adding an alcohol solution to said first preparation liquid;
a third step (S3) of forming a third preparation liquid by adding a water-repellent carbon particle (53) with a fluorine group to said second preparation liquid; and
a fourth step (S4) of forming a fourth preparation liquid by adding a solution of an ionomer (52) to said third preparation liquid.

2. The method of producing the catalyst ink according to claim 1, wherein
the ratio of said alcohol solution to said catalyst ink is equal to or greater than 15 wt%.

3. A method of producing a membrane electrode assembly (50) comprising the step of:
applying catalyst ink produced by the producing method according to claim 1 or 2 to one surface of an electrolyte membrane (10) and drying the applied catalyst ink, thereby forming said cathode catalyst layer (31).

## Patentansprüche

1. Verfahren zum Herstellen von Katalysatortinte, um eine Kathodenkatalysatorschicht (31) einer Membran-Elektrodenanordnung (50) zu werden, umfassend: einen ersten Schritt (S1) des Bildens einer ersten Vorbereitungsflüssigkeit durch Mischen eines Kohlenstoffpartikels (511), eines Katalysatorpartikels (512) und Wasser;
einen zweiten Schritt (S2) des Bildens einer zweiten Vorbereitungsflüssigkeit durch Zugeben einer Alkohollösung zu der ersten Vorbereitungsflüssigkeit;
einen dritten Schritt (S3) des Bildens einer dritten Vorbereitungsflüssigkeit durch Zugeben eines wasserabstoßenden Kohlenstoffpartikels (53) mit einer Fluorgruppe zu der zweiten Vorbereitungsflüssigkeit; und
einen vierten Schritt (S4) des Bildens einer vierten Vorbereitungsflüssigkeit durch Zugeben einer Lösung eines Ionomers (52) zu der dritten Vorbereitungsflüssigkeit.

2. Verfahren zum Herstellen der Katalysatortinte nach Anspruch 1, wobei
das Verhältnis der Alkohollösung zu der Katalysatortinte gleich oder größer als 15 Gew.- % ist.

3. Verfahren zum Herstellen einer Membran-Elektrodenanordnung (50), umfassend den Schritt:
Aufbringen von Katalysatortinte, hergestellt durch das Herstellungsverfahren nach Anspruch 1 oder 2, auf eine Oberfläche einer Elektrolytmembran (10) und Trocknen der aufgebrachten Katalysatortinte, wodurch die Kathodenkatalysatorschicht (31) gebildet wird.

## Revendications

1. Procédé de production d'une encre de catalyseur pour devenir une couche de catalyseur de cathode (31) d'un assemblage membrane-électrodes (50), comprenant :
une première étape (S1) de formation d'un premier liquide de préparation en mélangeant une particule de carbone (511), une particule de catalyseur (512) et de l'eau ;
une deuxième étape (S2) de formation d'un deuxième liquide de préparation en ajoutant une solution alcoolique audit premier liquide de préparation ;
une troisième étape (S3) de formation d'un troisième liquide de préparation en ajoutant une particule de carbone hydrofuge (53) avec un groupe fluor audit deuxième liquide de préparation ; et
une quatrième étape (S4) de formation d'un quatrième liquide de préparation en ajoutant une solution d'un ionomère (52) audit troisième liquide de préparation.

2. Procédé de production d'une encre de catalyseur selon la revendication 1, dans lequel
le rapport de ladite solution alcoolique à ladite encre de catalyseur est égal ou supérieur à 15 % en poids.

3. Procédé de production d'un assemblage membrane-électrodes (50) comprenant l'étape consistant à :
appliquer une encre de catalyseur produite par le procédé de production selon la revendication 1 ou 2 sur une surface d'une membrane électrolytique (10) et sécher l'encre de catalyseur appliquée, ce qui forme ladite couche de catalyseur de cathode (31).
